# EUROPEAN PATENT SPECIFICATION

(11) **EP 1 588 067 B1**
(45) Date of publication and mention of the grant of the patent: **14.09.2011**
(21) Application number: 04701443.6
(22) Date of filing: 12.01.2004
(51) Int. Cl.: F16D 1/091

(54) **HYDRAULIC PISTON-CYLINDER ARRANGEMENT**
HYDRAULISCHE KOLBEN-ZYLINDER-ANORDNUNG
ENSEMBLE CYLINDRE-PISTON HYDRAULIQUE

(30) Priority: 13.01.2003 SE 0300038; 17.10.2003 SE 0302736
(43) Date of publication of application: 26.10.2005
(73) Proprietor: Voith Turbo Safeset AB, 82434 Hudiksvall (SE)
(72) Inventor: FALK, Curt, Gunnar, S-824 51 Hudiksvall (SE)
(74) Representative: Lindblom, Erik J
(86) International application number: PCT/SE2004/000015
(87) International publication number: WO 2004/063585

(56) References cited:
- DE-A1- 19 809 638
- US-A- 4 525 916

## Description

### TECHNICAL FIELD

The present invention relates generally to an hydraulic piston-cylinder arrangement and then more particularly to a piston-cylinder arrangement, usable within a compressive coupling arrangement, that is adapted to enable a first sleeve or the like, such as an outer sleeve, to be displaced relative to a second sleeve or the like, such as an inner sleeve, whilst a film of lubricant, such as oil, under high pressure is developed between mutually facing and mating conical surfaces of said sleeves, or the like, such as to radially compress the inner sleeve or the like by means of radial expansion of said outer sleeve or the like and therewith cause the inner sleeve or the like to press against one or two shaft sections with an adapted clamping action and therewith provide a torque transmitting clamp coupling with which torque can be transmitted in the absence of slip.

This compressive coupling arrangement causes a straightforward pressure bound or shrink fit, which for its power transmitting capacity depends solely on the interference friction between mounted components.

It is further to be noted that compressive coupling arrangements of this kind may be used in different applications such as; having an outer component, such as a hub, mounted directly onto a tapered shaft end section, having an outer component, such as a hub or a sleeve, mounted on an externally tapered intermediate sleeve or having an outer component, such as a hub or a sleeve, mounted on an internally tapered intermediate sleeve or similar applications.

The inventive arrangement is hereinafter described under an application based on the use of two mutually co-ordinated sleeves that have mutually facing and matching and mating conical and correspondingly formed surfaces.

More specifically, the present invention relates to the provision of a simple hydraulic piston-cylinder arrangement in the form of a readily handled unit, where two, three, four or more such units are able to co-act beneficially around said coupling to achieve displacement of the outer sleeve or the like in relation to the inner sleeve or the like or said shaft section.

The invention also relates to a method for enabling an outer sleeve to be displaced relative to an inner sleeve with the use of a number of piston-cylinder arrangements in respect of such a clamp coupling.

### BACKGROUND OF THE INVENTION

Several different methods and arrangements of the aforesaid kind, in which one or more piston-cylinder arrangements is/are used, are known to the art.

The contents of the generic German Patent Publication DE-A1-198 09 638 that teaches a piston-cylinder arrangement (14, 13) integrated in the coupling can be mentioned as a first example of the earlier standpoint of techniques and the technical field to which the present invention relates.

This piston-cylinder arrangement, which includes a ring piston (14), is intended to find application in a clamp coupling with the aid of an outer sleeve (11) and an inner sleeve (12), wherein both sleeves can be displaced through a large cone angle and moved over one another to produce a clamping effect against a shaft (1).

In this case, the piston-cylinder arrangement (13, 14) is incorporated in a collar, which has an inner screw thread by means of which it co-acts with a threaded end portion of the outer sleeve (11), and with a counter-pressure element (15), which co-acts with the inner sleeve (12).

During said displacement of the sleeves, pressurised oil is delivered both to the mutually facing conical surfaces of the inner sleeve (12) and the outer sleeve (11) and also to the outer surface of the outer sleeve and to the inner surface of a hub (6).

The contents of U. S. Patent Publication US-A-4,529, 916 also belong to the earlier standpoint of techniques.

This publication also teaches a piston-cylinder arrangement integrated in the clamp coupling.

The piston-cylinder arrangement used in both of these earlier known constructions can be dismantled and removed.

The prior art also includes the publication "Oil injection Method", issued by SKF, Sweden; under publication number 2930 E (Reg. 41344-3000, 1975-9).

### SUMMARY OF THE PRESENT INVENTION

### TECHNICAL PROBLEMS

When taking into consideration the technical deliberations that a person skilled in this particular art must make in order to provide a solution to one or more technical problems that he/she encounters, it will be seen that it is necessary initially to realise the measures and/or the sequence of measures that must be undertaken to this end and also to realise which means is/are required in solving one or more of said problems. On this basis, it will be evident that the technical problems listed below are highly relevant to the development of the present invention.

When considering the earlier standpoint of technique as described above, it will be seen that a technical problem resides in the ability to realise the significance of and the advantages afforded by utilising one or more co-ordinated hydraulic piston-cylinder arrangements, each in the form of an individual unit, wherein preferably a plurality of such units are distributed around the coupling and used simultaneously such as to enable a first sleeve or the like, such as the outer sleeve, to be displaced relative to a second sleeve or the like, such as the inner sleeve, during the development of a high pressure lubricant film, such as an oil film, between the mutually facing, conical mating surfaces of the sleeves or the like.

Another technical problem resides in the ability to realise the significance of and the advantages afforded by allowing each of the piston-cylinder arrangements in unit-form to include a first part of a first two-part coupling element where a second part of said coupling element is allocated to said outer sleeve or the like.

It will also be seen that a technical problem resides in the ability to realise the significance of and the advantages afforded by allowing said second part of the first two-part coupling element to be formed by the outer surface of the outer sleeve or the like.

Another technical problem resides in the ability to realise the significance of and the advantages afforded by distributing along the cylindrical outer surface of the outer sleeve or the like a plurality, normally a few, axially displaced second parts related to the first two-part coupling element so as to enable the outer sleeve or the like to be displaced over the inner sleeve successively and in several short increments with regard to a chosen small cone angle.

A further technical problem also resides in realise the significance of and the advantages afforded by including in the piston-cylinder arrangement a first part of a second two-part coupling element, where a second part of said two-part coupling element is allocated to said inner sleeve or the like or to a corresponding counter pressure element.

Another technical problem resides in the ability to realise the significance of and the advantages afforded by allowing the first and the second parts of the first coupling element and also the first and the second parts of the second coupling element to consist of mutually corresponding parts, that can be readily caused to co-act fixedly with each other and also readily separated from each other so that displacement of the outer sleeve or the like over the inner sleeve or the like can be achieved through the medium of a number of hydraulic piston-cylinder arrangements in the form of simple units, said arrangements being easily removed, and therewith obtain a clamping joint against a shaft, for instance for joining together two mutually opposed shaft sections through the medium of a strongly dimensioned outer sleeve or the like and a relatively thin inner sleeve or the like with a relatively small cone angle or conicity.

It will be seen that in the case of the above application, a technical problem resides in the creation of said fixed co-action between corresponding parts of the coupling element (s) with the aid of the hydraulic pressure applied to respective piston-cylinder arrangements.

It will also be seen that a technical problem resides in the ability to realise the significance of and the advantages afforded by forming the first part of the first coupling element on the outer periphery of a cylinder of the piston-cylinder arrangement.

A further technical problem resides in the ability to realise the significance of and the advantages afforded by giving the first part of the first two-part coupling element the form of a shoulder, and by giving the second part the form of a circular groove disposed on the outer surface of the outer sleeve or the like.

Still another technical problem resides in the ability to realise the significance of and the advantages afforded by providing a shoulder with a narrow projection which, when loosened axially, co-acts with a corresponding circular slot in the interior of the circular groove in the outer surface of the outer sleeve or the like.

It will also be seen that a technical problem resides in the ability to realise the significance of and the advantages afforded by creating conditions that enable the first two-part coupling element to be adapted for secure locking co-action between its first part belonging to said piston-cylinder arrangement and its second part on said sleeve or the like when the outer sleeve or the like is caused to be displaced under pressure relative to the inner sleeve or the like or to a counter-pressure element.

Another technical problem is to realise the significance of and the advantages afforded by allowing the piston of the piston-cylinder arrangement to be reciprocatingly movable in the cylinder of said arrangement and to have an outer part in the form of a curved finger, where the first part of a second two-part coupling element is formed.

Another technical problem resides in the ability to realise the significance of and the advantages afforded by allowing the outer part of the piston-associated part of the arrangement to be formed as the first part by the second two-part coupling element with an edge surface belonging to the first part that can be inserted into an outwardly open inner groove formed in the inner cylindrical surface of the inner sleeve or the like.

Yet another technical problem resides in the ability to realise the significance of and the advantages afforded by forming or working one or both end regions of the outer sleeve or the like to obtain reduced bending resistance at said end region or end regions, and therewith reduce occurring force components concentrated on one or two extremely short shaft sections situated adjacent one or both end regions or edge regions of the outer sleeve (and/or the inner sleeve).

Another technical problem resides in the ability to realise the significance of and the advantages afforded by creating conditions which will enable the outer sleeve or the like to be subjected to a pulling force, at least during initial displacement of the outer sleeve over the inner sleeve or the like and/or said shaft.

Yet another technical problem resides in the ability to realise the significance of and the advantages afforded by enabling one and the same hydraulic pressure from one and the same pressure source to be delivered to said piston-cylinder arrangement as said lubricant or oil film between mutually opposing conical surfaces of respective sleeves or the like.

A technical problem also resides in the ability to realise the significance of and the advantages afforded by mutually adapting the area difference between the circles defined by the largest radius of the conical shape and the smallest radius of said conical shape to the active area of the piston-cylinder arrangement, the active area being defined as the difference between the cross-sectional areas of the cylinder and the piston.

It is believed that a technical problem will reside in the ability to realise the significance of and the advantages afforded by allowing this area difference to be slightly smaller than the active area of the piston-cylinder arrangement by a factor of between 1.2 and 2.0.

### SOLUTION

The present invention takes as its starting point the afore described known technique where at least one hydraulic piston-cylinder arrangement is adapted to displace a first sleeve or the like, such as an outer sleeve, relative to a second sleeve or the like, such as an inner sleeve, during the development of a lubricant film, as an oil film, of high pressure between the mutually facing conical mating surfaces of the sleeves or the like.

The invention builds on the concept of creating radial compression of the inner sleeve or the like by radial expansion of the outer sleeve or the like, such that the inner sleeve or the like will be pressed against one or two shaft sections with an adapted clamping action such as to form a slip-free torque transferring clamp coupling.

With the intention of solving one or more of the aforesaid technical problems, it is proposed, in accordance with the present invention, that the known technique shall be supplemented with the use of a piston-cylinder arrangement, or more practically with a plurality of such arrangements, such as a few piston-cylinder arrangements, consisting of complete units that can be very readily applied and fastened to and removed from the coupling.

To this end, it is proposed that each piston-cylinder arrangement includes or is related to a first part of a first two-part coupling element, where a second part is allocated to the outer sleeve or the like, and that said piston-cylinder arrangement shall also include or be related to a first part of a second two-part coupling element, where a second part is allocated to said inner sleeve or the like, a shaft, a shaft section or some corresponding counter-pressure element.

More particularly, it is proposed in accordance with the invention, that both the first and the second parts of the first coupling element and the first and second parts of the second coupling element are able to fixedly co-act with each other very readily and can be readily separated from each other.

By way of embodiments, that lie within the scope of the concept of the present invention, it is proposed that the external surface of the cylinder of said piston-cylinder arrangement may be caused to include the first part of the first coupling element, and that said first part can be given the form of a shoulder and the second part can be given the form of a circular groove in one end-portion of the outer sleeve or the like.

It is also proposed that the shoulder may include a projection that is adapted for corresponding co-action with a circular slot disposed in the circular groove in the outer sleeve or the like.

It is also proposed that the first coupling element (and also the second coupling element) may be adapted for fixed co-action between said two corresponding parts in conjunction with the establishment of a pressing or diverging force on the outer sleeve or the like so as to displace said sleeve in relation to the inner sleeve and the shaft or the counter-pressure surface used.

It is also proposed that the piston of the piston-cylinder arrangement shall be capable of reciprocal movement in the cylinder of said arrangement and shall include an outer part in the form of a curved finger.

According to the invention, the outermost part of the piston is formed as the first part of the second two-part coupling element and has an edge surface that can be inserted between the outer surface of the shaft and a circular groove in the inner surface of the inner sleeve or the like.

It is proposed in particular that one or both end regions of the outer sleeve or the like are worked and/or formed to have a reduced bending resistance and therewith reduce otherwise occurring deleterious force components acting on one or two very short shaft sections located adjacent to and beneath one or both end regions of said sleeve or the like.

It is also proposed that the outer sleeve or the like is displaceable relative to the inner sleeve or the like at least initially with the aid of a pulling force.

With the intention of achieving successive displacement of the outer sleeve or the like relative to the inner sleeve or the like with the aid of one and the same short piston-cylinder arrangement, it is proposed that a number of second parts related to the first coupling element are distributed axially along the outer surface of the outer sleeve or the like.

It is also proposed, in accordance with the present invention, that one and the same hydraulic pressure from one and the same pressure source is applied to the piston-cylinder arrangement as said lubricant film, such as an oil film between the mutually facing conical surfaces of said sleeves or the like.

It is also proposed that the difference in area between the circles defined by the largest radius and the smallest radius of the conical shape is adapted to the active area of the piston-cylinder arrangement, so that said area difference will be slightly smaller than the active area of the piston-cylinder arrangement by a factor of between 1.2 and 2.0.

The present invention also relates to a method of displacing an outer sleeve or the like relative to an inner sleeve or the like in a clamp coupling by virtue of the mutual co-action of at least two, preferably more, piston-cylinder arrangements structured as individual units.

### ADVANTAGES

The primary advantages afforded by the present invention and the significant characteristics of the invention reside in the creation of conditions which enable a number, such as a plurality, of simple piston-cylinder arrangements structured as separate units to be readily applied to an outer sleeve or the like and an inner sleeve or the like of a clamp coupling, and to allow each of said piston-cylinder arrangements to be activated simultaneously such as to displace the outer sleeve or the like relative to the inner sleeve or the like with the aid of a lubricant film, such as an oil film, and to enable the film to be removed in a sleeve or the like co-ordinated position in which the coupling is established, and to readily remove each of the piston-cylinder arrangements used, said coupling comprising a strongly dimensioned outer sleeve or the like, which functions to compress a thin inner sleeve or the like into firm clamping co-action with a shaft or two adjacent shaft portions in response to a radially acting pressure force.

One or both end regions of the outer sleeve or the like have been worked to have a reduced bending resistance, therewith reducing the otherwise occurring force components concentrated on one or two short shaft sections situated adjacent to and beneath one or both end regions of said sleeve or the like.

The primary characteristic features of the present invention are set forth in the characterising clause of the accompanying Claim 1, and a method of displacing an outer sleeve of a clamp coupling relative to an inner sleeve is defined in the characterising clause of the accompanying Claim 14.

### BRIEF DESCRIPTION OF THE DRAWINGS

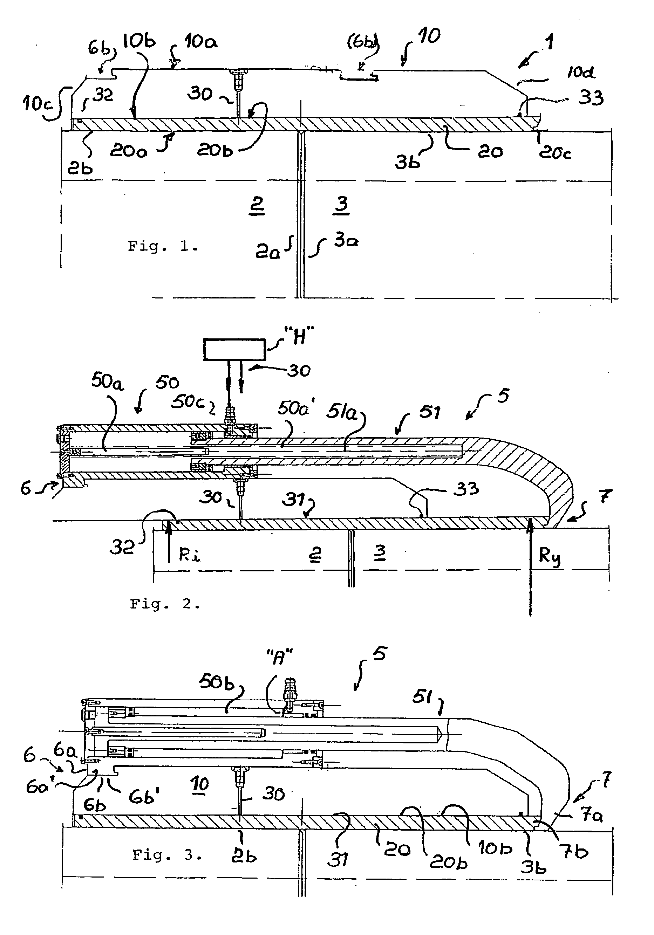

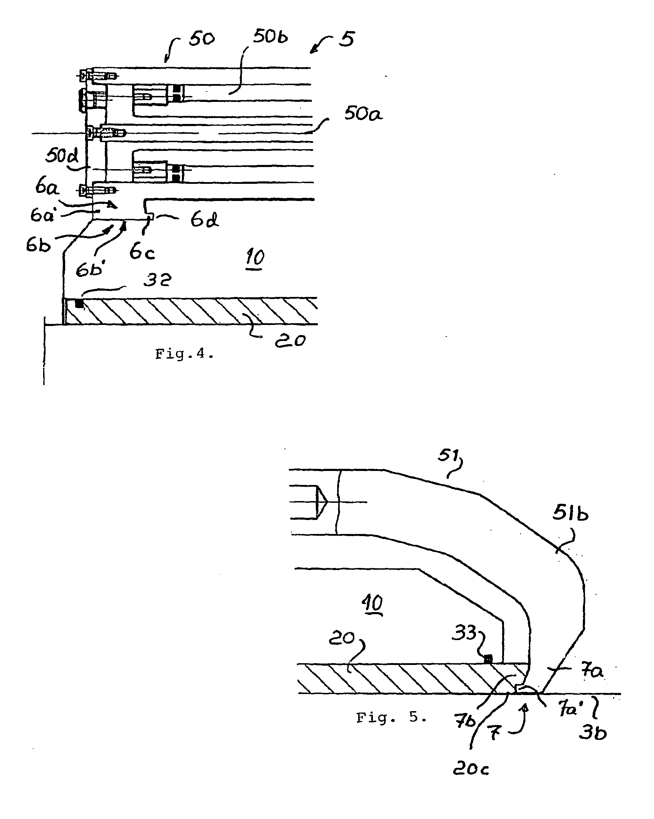

An embodiment of the present invention at present preferred and having the features characteristic of the invention will now be described in more detail by way of example with reference to the accompanying drawings, in which; Figure 1 is a sectioned side view of a clamp coupling extending over two mutually opposite shaft sections to provide slip-free torque transmission; Figure 2 illustrates the coupling in a non-mounted state, with only one of a number of hydraulic piston-cylinder arrangements being shown applied for co-action between an outer sleeve and an inner sleeve in accordance with the invention; Figure 3 illustrates a coupling state corresponding to that shown in Figure 1, where the illustrated hydraulic piston-cylinder arrangement has been activated and the outer sleeve has been displaced in one single stroke relative to the inner sleeve, to the position shown in Figure 1; Figure 4 is a somewhat enlarged illustration of the hydraulic piston-cylinder arrangement and of the left portion of the coupling shown in Figure 3; and Figure 5 is a corresponding somewhat enlarged view of the right portion of the piston-cylinder arrangement and the clamp coupling shown on the right of Figure 3.

### DESCRIPTION OF EMBODIMENTS AT PRESENT PREFERRED

It is pointed out initially that we have chosen to use in the following description of embodiments at present preferred and including significant characteristic features of the invention illustrated in the figures of the accompanying drawings special terms and terminology with the primary intention of illustrating the inventive concept more clearly.

However, it will be noted that the expressions used shall not be seen as limited solely to the terms chosen and that each chosen term shall be interpreted as also including or technical equivalents that function in at least essentially the same way so as to achieve the same or essentially the same intention and/or technical effect.

Figure 1 illustrates schematically the prerequisites of the present invention, wherein the features significant of the present invention are generally concretised by a proposed embodiment described in more detail in the following text.

It is hereby noted that in the introductory section of the present application is has been presented a number of different applications using none, one or two sleeves for causing a coupling arrangement to a shaft section whereby the present invention may be used in each of these applications.

The following description over now preferred embodiments do not describe an application to each of these possible applications and additional coupling arrangements as a person skilled in this technical field are aware of the steps to be taken for applying the features of the present invention to a hub, to one sleeve only or to two mating sleeves to a shaft design and similar considerations.

Thus, Figure 1 shows a so-called clamp coupling 1, which is applied to connect a first shaft 2 to a second shaft 3 where respective ends 2a and 3a of said shafts are mutually co-ordinated and positioned midway beneath the longitudinal extension of the coupling 1.

The coupling 1 includes a first sleeve or the like, i.e. here representing an outer sleeve 10, which is shown in section but not sectioned, and which is heavily dimensioned, and a second sleeve or the like, i.e. here representing an inner sleeve 20, which is shown in section but which is not sectioned and which is thinly dimensioned.

The outer sleeve 10 has a cylindrical outer surface 10a and a slightly conical inner surface 10b, and the inner sleeve 20 has a cylindrical inner surface 20a and a slightly conical mating and matching outer surface 20b. The conical shapes of the surface 10b and the surface 20b mutually correspond with a small cone angle or conicity.

In the absence of load, the inner sleeve 20 can be displaced over the shaft sections 2, 3, meaning that the dimensions of the inner cylindrical surface 20a are somewhat larger than the dimensions of the outer surfaces 2b, 3b of the shafts.

The conicity of respective conical mating surfaces 10b and 20b is the same and less than 1: 30, such as 1: 100.

The radial clamping forces acting against the shafts 2 and 3 and the shaft surfaces 2b, 3b shall act on the shafts 2 and 3 as a result of the expansion of the outer sleeve 10 over the inner sleeve 20 such that clamping forces will act on the outer shaft section 2b of the shaft 2 and the outer shaft section 3b of the shaft 3 and therewith provide a slip-free torque transmission between the shaft 2 and the shaft 3.

When mounting the coupling 1, a lubricant film represented by an oil film 31 (Figure 2) under high pressure is applied via a channel 30 and an oil pressure source (not shown), said oil film 31 being enclosed by a sealing ring 32 fitted to the inner sleeve 20 and a sealing ring 33 fitted to the outer sleeve 10 in respect of mutually opposed conical surfaces 10b and 20b.

The invention includes the use of a number of mutually similar piston-cylinder arrangements 5, of which only one is shown in Figure 2 in a fully extended state and in Figure 3 in a fully retracted state.

The piston-cylinder arrangement 5 includes a cylinder part 50 and a piston part 51.

Hydraulic pressure is applied to the cylinder 50 via a valve 50c, therewith successively filling a chamber 50b and causing the piston 51 to be displaced into the cylinder 50, from the position shown in Figure 2 to the position shown in Figure 3.

Located in the cylinder 50 is a centrally orientated rod 50a which is adapted for movement into and out of a central channel 51 a in the piston 51 and therewith control or guide a return spring 50a'.

In accordance with the invention, the left part of the piston-cylinder arrangement 5 and the cylinder 50 of said arrangement include a first part 6a (Figure 4) of a first two-part coupling element 6 and the outer sleeve 10 carries a second part 6b of said coupling element 6.

The piston part 51 of the piston-cylinder arrangement 5 includes a first part 7a of a second two-part coupling element 7, wherewith a second part 7b of said second two-part coupling element is carried on the inner sleeve 20.

Alternatively, the second part 7b may be provided on the shaft 3 or on some other fixedly related counter-pressure surface, so as to cause displacement of the outer sleeve 10 solely in relation to the inner sleeve 20, to the position shown in Figure 3. Both the first and second parts 6a and 6b in the first coupling element 6 and the first and second parts 7a and 7b in the second coupling element 7 shall comprise mutually corresponding parts that can co-act readily and fixedly and that can be readily separated from one another.

It will be seen from Figure 4 that the outer end portion 50d of the cylinder 50 of the piston-cylinder arrangement 5 includes the first part 6a of the coupling element 6 as an integral part.

The first part 6a has the form of a shoulder 6a'and the second part 6b has the form of a circular groove 6b'which extends around the outer sleeve 10 in the proximity of its end-portion 10c, with the groove open to the left.

More particularly, the shoulder 6a'includes a projection 6c intended for corresponding co-action with a circular slot 6b in the circular groove 6b', said circular groove 6b'being open to the left in Figure 4 so that the shoulder 6a'and the circular groove 6b'can be readily caused to co-act fixedly with each other by simple displacement of the arrangement 5 to the right in Figure 4, while corresponding movement in the opposite direction enables the piston-cylinder arrangement 5 to be readily loosened from the outer sleeve 10.

More particularly, it will be seen that the first coupling element 6 (and also the second coupling element 7) is adapted to provide fixed co-action between said two parts 6a, 6b in response to an established pulling or pressing and displacing force on the outer sleeve 10 relative to the inner sleeve 20 and therewith also relative to respective shafts 2 and 3.

The piston 51 of the piston-cylinder arrangement 5 is movable backwards and forwards in the cylinder part 50 and has an outer part 51 b in the form of a curved finger.

The outer part 51 b of the piston is formed as a first part 7a of a second coupling element 7 and has an edge surface 7a'that can be inserted between the outer surface 3b of the shaft and a circular groove 20c in the inner surface 20a of said inner sleeve 20.

It will be seen from Figure 1 that one or both end regions of the outer sleeve 10 is/are provided with a groove 6b and an adjacent bevel 10c or a bevel 10d, so as to reduce bending resistance and therewith also reduce occurring concentrated force components that would otherwise act on one or two short shaft sections located adjacent one or both end regions of the sleeves 10, 20.

The conditions in which this provision can be made and the consequences of such provisions are shown and described more specifically in a Swedish Patent Application No. 03 02675-4, filed on October 9, 2003 and the corresponding International Patent Application filed concurrently with the present application.

Figure 1 also shows that the second part 6b of the first two-part coupling element 6 can be repeated along the outer surface of the outer sleeve 10 so as to enable conditions for successive displacement of the outer sleeve along the inner sleeve 20 to be achieved with a shorter piston-cylinder arrangement 5.

Figure 1 shows only one such second part (6b') for providing a pulling force on the sleeve 10 during displacement to the right in Figure 2. These second parts (6b') are also in the form of grooves in the outer surface 10a of the outer sleeve 10.

The invention also includes a method of displacing an outer sleeve or the like 10 relative to an inner sleeve or the like 20 in respect of a clamp coupling, by causing two, preferably more, such as three or four, piston-cylinder arrangements 5 to co- act between the outer sleeve or the like 10 and the inner sleeve or the like 20 in accordance with what has been described with reference to Figures 2 to 5 inclusive.

It also lies within the scope of the invention to utilise one and the same hydraulic pressure from one and the same pressure source "H" through the channel 30 and the valve 50c, therewith greatly facilitating handling of the coupling arrangement.

Such an application requires a given degree of co-ordination between the active areas of the piston-cylinder arrangement, and the difference in area between the circles defined by the largest radius "Ry" of the conical shape and the smallest radius "Ri" of said conical shape. The active area of said piston-cylinder arrangement 5, being referenced "A", is defined as the difference between the cross-sectional areas of the cylinder 50 and the piston 51, and given cone angles, among other things.

More particularly, it is a question of allowing the difference in area between the circles defined by the largest radius "Ry" of the conical shape and the smallest radius "Ri" of said conical shape to be somewhat smaller than the sum of all the co-ordinated active areas, "A", of the piston-cylinder arrangement, such as by a factor of between 1.2 and 2.0.

This proposed distribution of requisite active areas enables the external dimensions of used units to be smaller than would otherwise be the case. A further advantage is that when the number of units provided for displacing the outer sleeve over the second sleeve is too small, the invention enables a further unit to be added.

These units, each of small outer dimensions, can then be distributed uniformly around the clamping joint and adapted to co-act together with one and the same groove 6b in the outer sleeve or the like 10, said groove functioning to constitute the second part of the first two-part coupling element 6 for all units used.

It will be understood that the invention is not restricted to the afore described exemplifying embodiment thereof and that modifications can be made within the scope of the accompanying Claims.

It will be noted in particular that each illustrated unit can be combined with each other illustrated unit within the framework of achieving the desired technical function.

## Claims

1. A compressive coupling arrangement (1) comprising:
- a hydraulic piston-cylinder arrangement (5); and
- at least two sleeves (10, 20);
wherein the hydraulic piston-cylinder arrangement (5) is adapted to enable a first sleeve or the like, such as an outer sleeve (10), to be displaced relative to a second sleeve or the like, such as an inner sleeve (20), during development of a lubricant film, such as an oil film (31), under high pressure between mutually facing and mating conical surfaces (10b, 20b) of said sleeves or the like, such that radial expansion of the outer sleeve or the like (10) will cause radial compression of the inner sleeve or the like (20) and such that said inner sleeve or the like will be pressed against one or two shaft sections (2,3) to achieve a clamping effect and therewith provide a slip-free torque transmission coupling,
- the piston-cylinder arrangement (5) including a first part (6a) of a first two-part coupling element (6);
- a second part (6b) of said first two-part coupling element (6) being carried by the outer sleeve or the like (10); **characterised in that**:
- the piston-cylinder arrangement (5) also includes a first part (7a) of a second two-part coupling element (7);
- a second part (7b) of said second two-part coupling element (7) is carried by said inner sleeve or the like (20) or a corresponding counter-pressure surface (3); and
- both said first and said second parts (6a; 6b) of the first coupling element (6) and the first and the second parts (7a; 7b) of the second coupling element (7) comprise mutually corresponding parts adapted for secure locking co-action with one another, that may be readily separated from each other.

2. An arrangement according to Claim 1, **characterised in that** the cylinder (50) of the piston-cylinder arrangement (5) carries a first part (6a) of a coupling element (6).

3. An arrangement according to Claim 2, **characterised in that** said first part (6a) has the form of a shoulder (6a'); and **in that** said second part (6b) has the form of at least one circular groove (6b') in the outer sleeve or the like (10).

4. An arrangement according to Claim 3, **characterised in that** the shoulder (6a') includes a projection (6c) for co-action with a circular slot (6d) in the circular groove (6b') on the outer sleeve or the like.

5. An arrangement according to Claim 1, **characterised in that** the first coupling element (6) and/or the second coupling element (7) are/is adapted for fixed co-action between its two parts in the establishment of a pulling or pressing and displacing force for displacement of the outer sleeve or the like (10) relative to the inner sleeve or the like (20).

6. An arrangement according to Claim 1, **characterised in that** the piston (51) of said arrangement is adapted to move reciprocatingly in the cylinder (50) and has an outer part (51 b) in the form of a curved finger.

7. An arrangement according to Claim 1 or 6, **characterised in that** the outer part (51 b) of the piston (51) forms a first part (7a) of a second two-part coupling element (7), having an edge surface (7a'), which is insertable between the outer surface (3b) of the shaft (3) and a groove (20c) in the inner surface (20a) of the inner sleeve or the like (20).

8. An arrangement according to Claim 1, **characterised in that** one or both end regions of the outer sleeve or the like (10) is/are formed and/or worked to obtain reduced bending resistance therewith enabling the reduction in occurring force components concentrated on one or two short sections located adjacent to and/or beneath one or both end regions of said sleeve or the like (10).

9. An arrangement according to Claim 1, **characterised in that** said outer sleeve or the like can be displaced relative to the inner sleeve or the like in response to a pulling force.

10. An arrangement according to Claim 1, **characterised in that** a number of second parts (6b) related to the first two-part coupling element (6) are distributed along the outer surface (10a) of the outer sleeve or the like (10).

11. An arrangement according to Claim 1, **characterised in that** one and the same hydraulic pressure from one and the same pressure source ("H") is adapted for delivery to said piston-cylinder arrangement as said film between mutually facing conical surfaces of respective sleeves or the like.

12. An arrangement according to Claim 1 or 11, **characterised by** adaptation of the difference in area between the circles defined by the largest radius ("Ry") and the smallest radius ("Ri") of the conical shape, to an active area ("A") of said piston-cylinder arrangement (5), defined as the difference between the cross-sectional areas of the cylinder (50) and the piston (51).

13. An arrangement according to Claim 12, **characterised in that** the difference in areas is slightly smaller than the active area ("A") of the piston-cylinder arrangement (5) by a factor of between 1.2 and 2.0.

14. A method relating to a clamp coupling (1) for displacing an outer sleeve or the like (10) relative to an inner sleeve or the like (20), **characterised by** causing at least two, preferably more, piston-cylinder arrangements (5) of the compressive coupling arrangement according to any one of the preceding claims, to co-act between the outer sleeve or the like (10) and the inner sleeve or the like (20).

## Patentansprüche

1. Druckkupplungsanordnung (1), umfassend:
- eine hydraulische Kolben-Zylinder-Anordnung (5); und
- zumindest zwei Hülsen (10, 20);
wobei die hydraulische Kolben-Zylinder-Anordnung (5) dazu ausgestaltet ist, es einer ersten Hülse oder dergleichen, beispielsweise einer Außenhülse (10), zu erlauben, relativ zu einer zweiten Hülse oder dergleichen, beispielsweise einer Innenhülse (20), unter Bildung eines Schmiermittelfilms, beispielsweise eines Ölfilms (31), unter Hochdruck zwischen einander zugewandten und zusammenpassenden Konusflächen (10b, 20b) der Hülsen oder dergleichen, derart verlagert zu werden, dass eine Radialausdehnung der Außenhülse oder dergleichen (10) eine Radialkompression der Innenhülse oder dergleichen (20) bewirkt, und dass die Innenhülse oder dergleichen gegen einen oder zwei Wellenabschnitte (2, 3) gepresst wird, um eine Klemmwirkung zu erzielen und damit eine rutschfeste Drehmomentübertragungskoppelung bereitzustellen,
- die Kolben-Zylinder-Anordnung (5) umfasst ein erstes Teil (6a) eines ersten zweiteiligen Kupplungselements (6);
- ein zweites Teil (6b) des ersten zweiteiligen Kupplungselements (6) wird durch die Außenhülse oder dergleichen (10) getragen;
**dadurch gekennzeichnet, dass**:
- die Kolben-Zylinder-Anordnung (5) ferner ein erstes Teil (7a) eines zweiten zweiteiligen Kupplungselements (7) umfasst;
- ein zweites Teil (7b) des zweiten zweiteiligen Kupplungselements (7) durch die Innenhülse oder dergleichen (20) oder eine korrespondierende Gegendruckfläche (3) getragen wird; und
- sowohl das erste und zweite Teil (6a; 6b) des ersten Kupplungselements (6) als auch das erste und zweite Teil (7a; 7b) des zweiten Kupplungselements (7) miteinander korrespondierende Teile aufweisen, die dazu ausgestaltet sind, miteinander sicher sperrend zusammenzuwirken, und die leicht voneinander getrennt werden können.

2. Anordnung nach Anspruch 1, **dadurch gekennzeichnet, dass** der Zylinder (50) der Kolben-Zylinder-Anordnung (5) ein erstes Teil (6a) eines Kupplungselements (6) trägt.

3. Anordnung nach Anspruch 2, **dadurch gekennzeichnet, dass** das erste Teil (6a) die Form einer Schulter (6a') aufweist; und dass das zweite Teil (6b) die Form zumindest einer kreisförmigen Nut (6b') in der Außenhülse oder dergleichen (10) aufweist.

4. Anordnung nach Anspruch 3, **dadurch gekennzeichnet, dass** die Schulter (6a') einen Vorsprung (6c) zum Zusammenwirken mit einem kreisförmigen Schlitz (6d) in der kreisförmigen Nut (6b') der Außenhülse oder dergleichen umfasst.

5. Anordnung nach Anspruch 1, **dadurch gekennzeichnet, dass** das erste Kupplungselement (6) und/oder das zweite Kupplungselement (7) dazu ausgestaltet sind/ist, bei der Ausbildung einer ziehenden oder drückenden und verlagernden Kraft zur Verlagerung der Außenhülse oder dergleichen (10) relativ zur Innenhülse oder dergleichen (20) zwischen ihren beiden Teilen fest zusammenzuwirken.

6. Anordnung nach Anspruch 1, **dadurch gekennzeichnet, dass** der Kolben (51) der Anordnung dazu ausgestaltet ist, sich im Zylinder (50) hin und her zu bewegen, und ein Außenteil (51 b) in Form eines gekrümmten Fingers aufweist.

7. Anordnung nach Anspruch 1 oder 6, **dadurch gekennzeichnet, dass** das Außenteil (51 b) des Kolbens (51) ein erstes Teil (7a) eines zweiten zweiteiligen Kupplungselements (7) bildet, das eine Randfläche (7a') aufweist, die zwischen die Außenfläche (3b) der Welle (3) und eine Nut (20c) in der Innenfläche (20a) der Innenhülse oder dergleichen (20) einführbar ist.

8. Anordnung nach Anspruch 1, **dadurch gekennzeichnet, dass** ein oder beide Endbereiche der Außenhülse oder dergleichen (10) gebildet und/oder bearbeitet ist/sind, um eine verminderte Biegefestigkeit zu erzielen und es damit zu ermöglichen, auftretende Kraftkomponenten zu verringern, die auf einen oder zwei kurze Abschnitte konzentriert sind, die benachbart zu und/oder unter einem oder beiden Endbereichen der Hülse oder dergleichen (10) angeordnet sind.

9. Anordnung nach Anspruch 1, **dadurch gekennzeichnet, dass** die Außenhülse oder dergleichen in Reaktion auf eine Zugkraft relativ zur Innenhülse oder dergleichen verlagerbar ist.

10. Anordnung nach Anspruch 1, **dadurch gekennzeichnet, dass** eine Anzahl dem ersten zweiteiligen Kupplungselement (6) zugehöriger zweiter Teile (6b) entlang der Außenfläche (10a) der Außenhülse oder dergleichen (10) verteilt sind.

11. Anordnung nach Anspruch 1, **dadurch gekennzeichnet, dass** ein und derselbe hydraulische Druck von einer und derselben Druckquelle ("H") zur Abgabe an die Kolben-Zylinder-Anordnung als der Film zwischen einander zugewandten Konusflächen der jeweiligen Hülsen oder dergleichen ausgestaltet ist.

12. Anordnung nach Anspruch 1 oder 11, **gekennzeichnet durch** eine Anpassung des Flächenunterschieds zwischen den **durch** den Größtradius ("Ry") und den Kleinstradius ("Ri") der Konusform definierten Kreisen an eine Aktivfläche ("A") der Kolben-Zylinder-Anordnung (5), die als der Unterschied zwischen den Querschnittsflächen des Zylinders (50) und des Kolbens (51) definiert ist.

13. Anordnung nach Anspruch 12, **dadurch gekennzeichnet, dass** der Flächenunterschied um einen Faktor zwischen 1.2 und 2.0 geringfügig kleiner als die Aktivfläche ("A") der Kolben-Zylinder-Anordnung (5) ist.

14. Verfahren betreffend eine Klemmkupplung (1) zur Verlagerung einer Außenhülse oder dergleichen (10) relativ zu einer Innenhülse oder dergleichen (20), **gekennzeichnet durch** ein Veranlassen zumindest zweier, vorzugsweise mehrerer, Kolben-Zylinder-Anordnungen (5) der Druckkupplungsanordnung nach irgendeinem der vorhergehenden Ansprüche, zwischen der Außenhülse oder dergleichen (10) und der Innenhülse oder dergleichen (20) zusammenzuwirken.

## Revendications

1. Ensemble d'accouplement à compression (1), comprenant :
- un ensemble cylindre-piston (5) hydraulique ; et
- au moins deux manchons (10, 20) ;
dans lequel l'ensemble cylindre-piston (5) hydraulique est adapté pour permettre à un premier manchon ou analogue, tel qu'un manchon extérieur (10), d'être déplacé par rapport à un deuxième manchon ou analogue, tel qu'un manchon intérieur (20), durant le développement d'un film de lubrifiant, tel qu'un film d'huile (31), sous haute pression entre des surfaces coniques (10b, 20b), se faisant mutuellement face et adaptées, desdits manchons ou analogue, de manière que l'expansion radiale du manchon extérieur ou analogue (10) provoque une compression radiale du manchon intérieur (20) ou analogue, et de manière que ledit manchon intérieur ou analogue soit pressée contre une ou deux sections d'arbre (2, 3), pour obtenir un effet de serrage et, conjointement, fournir un couplage à transmission de couple sans glissement,
- l'ensemble cylindre-piston (5) comprenant une première partie (6a) d'un premier élément d'accouplement en deux parties (6) ;
- une deuxième partie (6b) dudit élément d'accouplement en deux parties (6) étant portée par le manchon extérieur ou analogue (10) ;
**caractérisé en ce que**
- l'ensemble cylindre-piston (5) comprend également une première partie (7a) d'un deuxième élément d'accouplement en deux parties (7) ;
- une deuxième partie (7b) dudit deuxième élément d'accouplement en deux parties (7) est portée par ledit manchon intérieur ou analogue (20), ou une surface à contre-pression (3) correspondante ; et
- à la fois lesdites première et deuxième parties (6a ; 6b) du premier élément d'accouplement (6) et les première et deuxième parties (7a ; 7b) du deuxième élément d'accouplement (7) comprennent des parties mutuellement correspondantes, adaptées pour assurer une action conjointe de verrouillage l'une avec l'autre, pouvant être aisément séparées l'une de l'autre.

2. Ensemble selon la revendication 1, **caractérisé en ce que** le cylindre (50) de l'ensemble cylindre-piston (5) porte une première partie (6a) d'un élément d'accouplement (6).

3. Ensemble selon la revendication 2, **caractérisé en ce que** ladite première partie (6a) présente la forme d'un épaulement (6a') ; et **en ce que** ladite deuxième partie (6b) présente la forme d'au moins une gorge circulaire (6b') dans le manchon extérieur ou analogue (10).

4. Ensemble selon la revendication 3, **caractérisé en ce que** l'épaulement '6a') comprend une saillie (6c) devant coopérer avec une fente circulaire (6d) dans la gorge circulaire (6b'), sur le manchon extérieur ou analogue.

5. Ensemble selon la revendication 1, **caractérisé en ce que** le premier élément d'accouplement (6) et/ou le deuxième élément d'accouplement (7) sont/est adapté pour une coopération fixe entre ses deux parties dans l'établissement d'une force de traction ou de pressage et de déplacement, pour le déplacement du manchon extérieur ou analogue (10) par rapport au manchon intérieur ou analogue (20).

6. Ensemble selon la revendication 1, **caractérisé en ce que** le piston (51) dudit ensemble est adapté pour se déplacer selon un mouvement alternatif dans le cylindre (50) et présente une partie extérieure (51 b) se présentant sous la forme d'un doigt courbé.

7. Ensemble selon la revendication 1 ou 6, **caractérisé en ce que** la partie extérieure (51 b) du piston (51) forme une première partie (7a) d'un deuxième élément d'accouplement en deux parties (7), ayant une surface de bord (7a'), susceptible d'être insérée entre la surface extérieure (3b) de l'arbre (3) et une gorge (20c) dans la surface intérieure (20a) du manchon intérieur ou analogue (20).

8. Ensemble selon la revendication 1, **caractérisé en ce qu'**une ou les deux régions d'extrémité du manchon extérieur ou analogue (10) est/sont formée(s) et/ou usinée(s) pour obtenir une résistance à la flexion réduite, permettant par là même la réduction des composantes de force se produisant, concentrées sur une ou deux courtes sections situées de manière adjacente à et/ou sous une ou les deux régions d'extrémité dudit manchon ou analogue (10).

9. Ensemble selon la revendication 1, **caractérisé en ce que** ledit manchon extérieur ou analogue peut être déplacé par rapport au manchon intérieur ou analogue, en réponse à une force de traction.

10. Ensemble selon la revendication 1, **caractérisé en ce qu'**une pluralité de deuxièmes parties (6b) afférentes au premier élément d'accouplement en deux parties (6) sont réparties le long de la surface extérieure (10a) du manchon extérieur ou analogue (10).

11. Ensemble selon la revendication 1, **caractérisé en ce qu'**une seule et même pression hydraulique provenant d'une seule et même source de pression ("H") est adaptée pour fourniture audit ensemble cylindre-piston, à titre de dit film, entre des surfaces coniques, se faisant mutuellement face, de manchons respectifs ou analogues.

12. Ensemble selon la revendication 1 ou 11, **caractérisé par** l'adaptation de la différence d'aire, entre les cercles définis par le rayon maximal ("Ry") et le rayon minimal ("Ri") de la forme conique, à une aire active ("A") dudit ensemble cylindre-piston (5), définie comme étant la différence entre les aires de section transversale du cylindre (50) et du piston (51).

13. Ensemble selon la revendication 12, **caractérisé en ce que** la différence des aires est légèrement plus petite que l'aire active ("A") de l'ensemble cylindre-piston (5), par un facteur compris entre 1,2 et 2,0.

14. Procédé, concernant un accouplement à serrage (1), pour déplacer un manchon extérieur ou analogue (10) par rapport à un manchon intérieur ou analogue (20), **caractérisé par** le fait de provoquer l'action coopérante d'au moins deux, de préférence plus, ensembles cylindre-piston (5) de l'ensemble d'accouplement de compression selon l'une quelconque des revendications précédentes, entre le manchon extérieur ou analogue (10) et le manchon intérieur ou analogue (20).
